# EUROPEAN PATENT SPECIFICATION

(11) **EP 0 706 469 B1**
(45) Date of publication and mention of the grant of the patent: **05.02.1997**
(21) Application number: 94918988.0
(22) Date of filing: 01.07.1994
(51) Int. Cl.: B62D 1/18, F16C 29/10

(54) **ANTIFRICTION ELEMENT FOR USE BETWEEN RELATIVELY SLIDING COMPONENTS OF AN ADJUSTABLE STEERING COLUMN**
REIBUNGSARMES ELEMENT FÜR DEN EINSATZ ZWISCHEN RELATIV ZUEINANDER VERSCHIEBBAREN KOMPONENTEN EINER VERSTELLBAREN LENKSÄULE
ELEMENT ANTIFRICTION S'APPLIQUANT ENTRE DES COMPOSANTS RELATIVEMENT COULISSANTS D'UNE COLONNE DE DIRECTION REGLABLE

(30) Priority: 09.07.1993 GB 9314263
(43) Date of publication of application: 17.04.1996
(73) Proprietor: THE TORRINGTON COMPANY LIMITED, Coventry Warwickshire CV4 9AE (GB)
(72) Inventor: BARTON, Laurence, George, Herbert, Warwickshire CV32 5XA (GB)
(74) Representative: Feakins, Graham Allan
(86) International application number: PCT/GB94/01431
(87) International publication number: WO 95/01901

(56) References cited:
- EP-A- 0 529 769

## Description

This invention relates to an antifriction element for use between relatively sliding components of an adjustable steering column for a vehicle, such as defined in the preamble of claim 1 and known for example from EP-A-0 529769.

With known constructions of clamping mechanisms for adjustable steering columns, whether rake and/or reach adjustable, the clamping mechanism allows relative sliding between one part of the steering column and another part of it in an unclamped condition, whilst the two parts are clamped together once the desired location has been set by the driver. The two parts are metal and so the relatively sliding metal faces can give an unsatisfactory "feel" to the user.

EP-A-0 529 769 discloses a locking device for an adjustable steering column assembly, the device having interengageable disc members with a spring between them to urge them apart, when so allowed, to facilitate adjustment of the steering column.

According to one aspect of the present invention, there is provided an antifriction element for use between relatively sliding components in a clamping mechanism of an adjustable steering column for a vehicle, the element being locatable between two said components, characterised in that said element is in the form of a slotted liner with two resilient flanges, one on each opposing side of a surface of the liner on which one of said components is intended to slide, the flanges extending in the free state of the liner at an angle to said surface of said liner, so that, in an unclamped state of the components, said flanges act to urge the components away from contact with one another to allow relative free sliding of the components on the element and, in a clamped state of the components, said flanges are deflected to allow direct contact between surfaces of the components to provide the clamping friction.

The invention also extends to an adjustable steering column incorporating an antifriction element such as defined in the preamble of claim 6 and known for example from EP-A-0 529769.

According to another aspect of the present invention, there is provided a steering column clamping mechanism for an adjustable steering column comprising: a first clamp member; a second clamp member slidable relative to the first clamp member; and an antifriction element interposed between the first clamp member and the second clamp member, characterised in that the antifriction element biasses the first clamp member and the second clamp member out of contact with one another when the steering column is in an unclamped state, one of the clamp members being in sliding contact with the antifriction element when the steering column is in the unclamped state, and the first clamp member and the second clamp member being in contact with one another when the steering column is in a clamped state.

Preferably, the antifriction element is formed of a plastics material, the relatively sliding components being of metal.

For a better understanding of the invention and to show how the same may be carried into effect, reference will now be made, by way of example, to the accompanying drawings, in which:-
Figure 1 is a diagrammatic perspective view of an antifriction element for use between relatively sliding components of an adjustable steering column for a vehicle,
Figure 2 illustrates the antifriction element of Figure 1 located between two such relatively sliding components in an unclamped condition,
Figure 3 is a view similar to Figure 2 but showing the clamped condition,
Figure 4 is a side view, partly in section, which shows an adjustable steering column incorporating two such antifriction elements, one being for a linear adjustment of the steering column and the other being for a vertical adjustment of the steering column, and
Figure 5 is an end view in section of the construction illustrated in Figure 4.

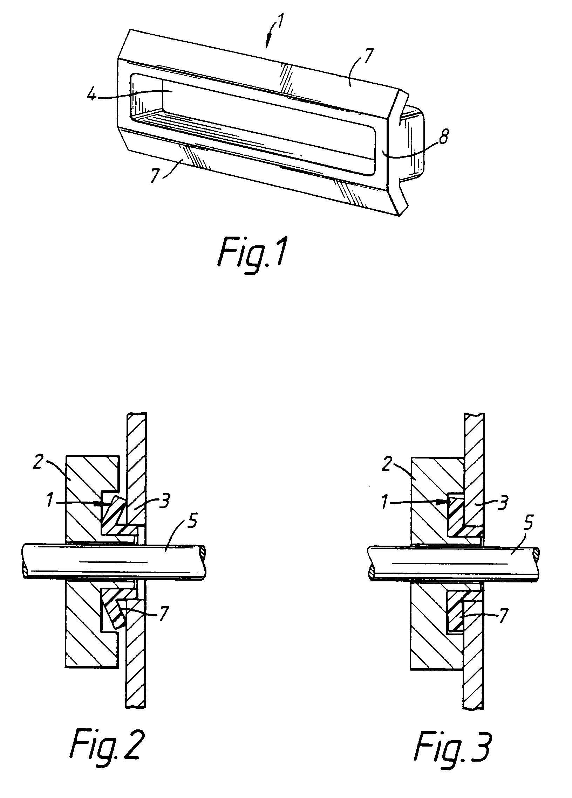

Referring to Figure 1, the antifriction element illustrated is in the form of a slotted, flanged plastics liner 1 for interposition between two relatively sliding components 2, 3, respectively, of an adjustable steering column for a vehicle.

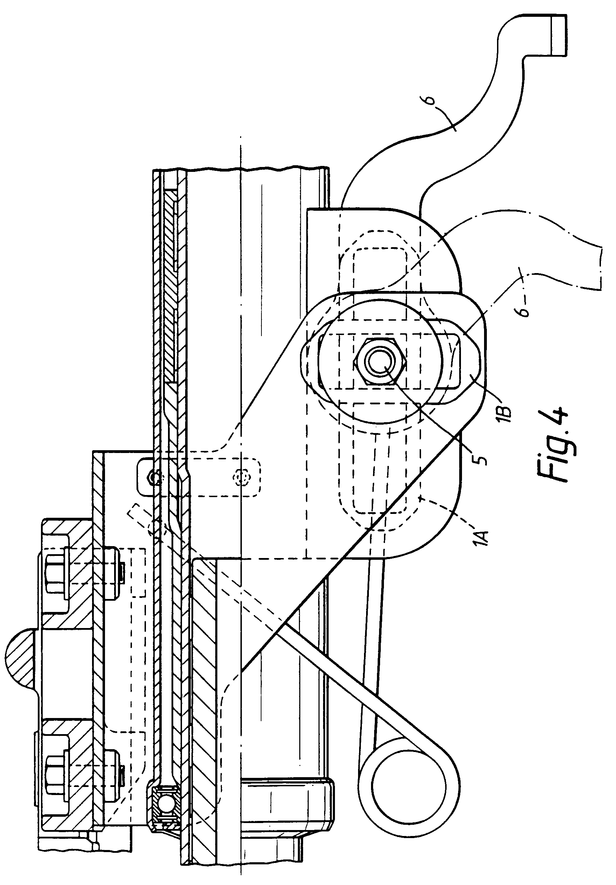

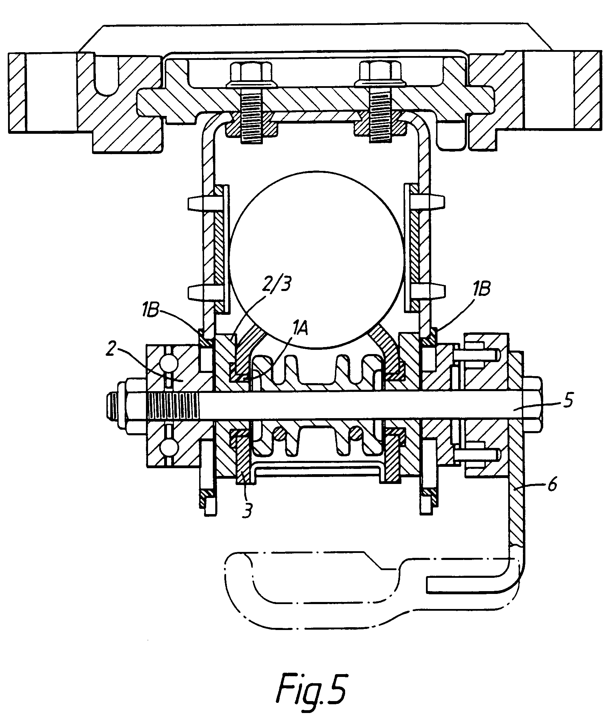

The liner 1 has a substantially rectangular form with a longitudinal slot 4 to accommodate an adjustment bar 5 of the adjustment mechanism, the adjustment bar 5 being linked to a clamp handle 6 (Figures 4, 5) of the clamping mechanism. As shown in Figure 4, two liners 1 are provided, one of them (1A) being for linear or reach adjustment of the steering column and the other (1B) being for vertical or rake adjustment of the column.

As best seen in Figure 1, the liner 1 has two opposing flanges 7 extending in its free state at an angle from the plane of an upper surface 8 of the liner.

As illustrated in Figures 2 to 5, the plastics liners 1 are located between the two relatively sliding metal components 2, 3 and Figure 2 shows that, when the clamping mechanism is in its unclamped condition, the flanges 7 of the liner 1 act to urge the components 2 and 3 away from one another so that relative sliding takes place on the plastics surface 8 of the liner 1 in a low friction manner (rather than the greater frictional reaction as would be the case of relatively sliding metal components in direct contact with one another).

Figure 3 illustrates the components in the clamped condition of the mechanism and here it will be seen that the flanges 7 have been deflected towards the plane of the surface 8 by the components 2 and 3 being pressed one against the other, so that the adjacent surfaces of the components 2 and 3 contact one another to provide a high resistance clamp force in a metal-to-metal contact.

As previously stated, Figure 4 shows two such liners although it will be appreciated that only one such liner need be provided for a mechanism which only adjusts in one plane.

The part labelled 2/3 in Figure 5 is of course the metal component 3 which is clamped into contact with the metal component 2 of the vertical adjustment liner 1B and it is also the metal component 2 which comes into contact with the metal component 3 with the interposition of the liner 1A of the linear adjustment facility.

Thus, the present construction of the element allows for a duel purpose slotted liner which allows low friction plastics contact for adjustment and high friction metal contact for positive locking of the mechanism.

## Claims

1. An antifriction element (1) for use between relatively sliding components (2, 3) in a clamping mechanism of an adjustable steering column for a vehicle, the element (1) being locatable between two said components (2, 3), characterised in that said element is in the form of a slotted liner (1) with two resilient flanges (7), one on each opposing side of a surface (8) of the liner on which one of said components (2, 3) is intended to slide, the flanges extending in the free state of the liner at an angle to said surface of said liner, so that, in an unclamped state of the components, said flanges (7) act to urge the components away from contact with one another to allow relative free sliding of the components on the element and, in a clamped state of the components, said flanges are deflected to allow direct contact between surfaces of the components to provide the clamping friction.

2. An element according to claim 1, and being made of plastics material.

3. An element according to claim 1 or 2, wherein the slot (4) of said liner is in said surface (8) of said liner on which one of said components is intended to slide.

4. An adjustable steering column for a vehicle, incorporating an antifriction element according to any one of the preceding claims.

5. An adjustable steering column according to claim 4, wherein two said elements (1) are provided, one for use in connection with rake adjustment and the other for use in connection with reach adjustment of the steering column.

6. A steering column clamping mechanism for an adjustable steering column comprising: a first clamp member (2); a second clamp member (3) slidable relative to the first clamp member; and an antifriction element (1) interposed between the first clamp member and the second clamp member, characterised in that the antifriction element (1) biasses the first clamp member (2) and the second clamp member (3) out of contact with one another when the steering column is in an unclamped state, one of the clamp members being in sliding contact with the antifriction element when the steering column is in the unclamped state, and the first clamp member and the second clamp member being in contact with one another when the steering column is in a clamped state.

## Patentansprüche

1. Reibungsarmes Element (1) für den Einsatz zwischen relativ zueinander verschiebbaren Komponenten (2, 3) in einem Klemm-Mechanismus einer verstellbaren Lenksäule für ein Fahrzeug, wobei das Element (1) zwischen zwei solcher Komponenten (2, 3) anordenbar ist, **dadurch gekennzeichnet,** daß das Element die Form einer geschlitzten Einlage (1) mit zwei nachgiebigen Flanschen (7) hat, einen an jeder gegenüberliegenden Seite einer Oberfläche (8) der Einlage, auf der eine der Komponenten (2, 3) gleiten soll, wobei die Flansche sich in dem freien Zustand der Einlage unter einem Winkel gegenüber der Oberfläche der Einlage erstrecken, so daß, in einem ungeklemmten Zustand der Komponenten, die Flansche (7) so wirken, daß sie die Komponenten von einer Berührung miteinander weg drücken, um ein relativ freies Gleiten der Komponenten auf dem Element zu gestatten, und, in einem geklemmten Zustand der Komponenten, die Flansche verformt sind, um eine direkte Berührung zwischen Oberflächen der Komponenten zu gestatten, um die Klemmreibung zu schaffen.

2. Element nach Anspruch 1, das aus einem Kunststoffmaterial hergestellt ist.

3. Element nach Anspruch 1 oder 2, bei dem der Schlitz (4) der Einlage sich in derjenigen Oberfläche (8) der Einlage befindet, auf der eine der Komponenten gleiten soll.

4. Verstellbare Lenksäule für ein Fahrzeug mit einem reibungsarmen Element gemäß einem der vorhergehenden Ansprüche.

5. Einstellbare Lenksäule nach Anspruch 4, bei der zwei Elemente (1) vorgesehen sind, eines zur Verwendung in Verbindung mit einer Neigungseinstellung und das andere zur Verwendung in Verbindung mit einer Längseinstellung der Lenksäule.

6. Lenksäulen-Klemm-Mechanismus für eine verstellbare Lenksäule mit einem ersten Klemmglied (2), einem zweiten Klemmglied (3), das relativ zu dem ersten Klemmglied gleitfähig ist, und mit einem reibungsarmen Element (1), das zwischen dem ersten Klemmglied und dem zweiten Klemmglied zwischengeschaltet ist, **dadurch gekennzeichnet,** daß das reibungsarme Element (1) das erste Klemmglied (2) und das zweite Klemmglied (3) aus einer Berührung miteinander heraus belastet, wenn die Lenksäule sich in einem ungeklemmten Zustand befindet, wobei eines der Klemmglieder in gleitender Berührung mit dem reibungsarmen Element ist, wenn die Lenksäule sich in dem ungeklemmten Zustand befindet, und wobei das erste Klemmglied und das zweite Klemmglied in Berührung miteinander sind, wenn sich die Lenksäule in einem geklemmten Zustand befindet.

## Revendications

1. Elément antifriction (1) destiné à être utilisé entre des composants coulissant de manière relative (2, 3) dans un mécanisme de serrage d'une colonne de direction réglable pour un véhicule, l'élément (1) pouvant se trouver entre lesdits deux composants (2, 3), caractérisé en ce que ledit élément est sous la forme d'une garniture fendue (1) avec deux rebords élastiques (7), un sur chaque côté opposé d'une surface (8) de la garniture sur laquelle un desdits composants (2, 3) est prévu pour coulisser, les rebords s'étendant dans l'état libre de la garniture en formant un angle par rapport à ladite garniture, de telle sorte que, dans un état desserré des composants, lesdits rebords (7) agissent afin de pousser les composants hors de contact l'un avec l'autre pour permettre un coulissement relatif libre des composants sur l'élément et, dans un état serré des composants, les dits rebords sont fléchis pour permettre un contact direct entre des surfaces des composants de façon à procurer le serrage par friction.

2. Elément selon la revendication 1, l'élément étant fabriqué en matière plastique.

3. Elément selon la revendication 1 ou 2, dans lequel la fente (4) de ladite garniture se trouve dans ladite surface (8) de ladite garniture sur laquelle un desdits composants est prévu pour coulisser.

4. Colonne de direction réglable pour un véhicule, incorporant un élément antifriction selon l'une quelconque des revendications précédentes.

5. Colonne de direction réglable pour un véhicule selon la revendication 4, dans laquelle deux dits-éléments (1) sont prévus, un pour une utilisation en liaison avec un réglage d'inclinaison et l'autre pour une utilisation en liaison avec un réglage de profondeur de la colonne de direction.

6. Mécanisme de serrage de colonne de direction pour une colonne de direction réglable, comportant : un premier élément de serrage (2) ; un deuxième élément de serrage (3) pouvant coulisser par rapport au premier élément de serrage ; et un élément antifriction (1) interposé entre le premier élément de serrage et le deuxième élément de serrage, caractérisé en ce que l'élément antifriction (1) rappelle le premier élément de serrage (2) et le deuxième élément de serrage (3) hors de contact l'un avec l'autre lorsque la colonne de direction est dans un état desserré, un des éléments de serrage étant en contact coulissant avec l'élément antifriction lorsque la colonne de direction est dans l'état desserré, et le premier élément de serrage et le deuxième élément de serrage étant en contact l'un avec l'autre lorsque la colonne de direction est dans un état serré.
